# EUROPEAN PATENT SPECIFICATION

(11) **EP 2 475 520 B1**
(45) Date of publication and mention of the grant of the patent: **24.10.2018**
(21) Application number: 10754868.7
(22) Date of filing: 09.09.2010
(51) Int. Cl.: B32B 17/08, B32B 27/32

(54) **A BARRIER COATED THERMO-MECHANICALLY STABLE, HEAT SEALABLE FILM, A PACKAGING LAMINATE COMPRISING THE FILM, A PACKAGING CONTAINER FORMED FROM THE PACKAGING LAMINATE AND A METHOD FOR THE PRODUCTION OF THE FILM**
THERMO-MECHANISCH STABILE HEISSIEGELFOLIE MIT SPERRSCHICHT, VERPACKUNGSLAMINAT MIT DER FOLIE, VERPACKUNGSBEHÄLTER AUS DEM VERPACKUNGSLAMINAT UND VERFAHREN ZUR HERSTELLUNG DER FOLIE
FILM THERMOSCELLABLE À REVÊTEMENT BARRIÈRE À STABILITÉ THERMIQUE ET MÉCANIQUE, STRATIFIÉ D'EMBALLAGE COMPORTANT LE FILM, RÉCIPIENT D'EMBALLAGE FORMÉ À PARTIR DU STRATIFIÉ D'EMBALLAGE ET PROCÉDÉ POUR LA PRODUCTION DU FILM

(30) Priority: 11.09.2009 SE 0901176
(43) Date of publication of application: 18.07.2012
(73) Proprietor: Tetra Laval Holdings & Finance S.A., 1009 Pully (CH)
(72) Inventor: ROCHAT, Gil, 1684 Mèzières (CH); BONNEBAULT, Alain, 1920 Martigny (CH); BÜRKI, Monika, 1432 Belmont-sur-Yverdon (CH); LORENZETTI, Cesare, 1630 Bulle (CH)
(74) Representative: Tetra Pak - Patent Attorneys SE
(86) International application number: PCT/EP2010/005539
(87) International publication number: WO 2011/029597

(56) References cited:
- WO-A1-92/17539
- JP-A- 2004 010 067
- US-A- 5 346 763
- US-A- 5 725 962
- US-A- 5 885 721
- US-A1- 2003 207 054
- US-A1- 2005 260 366
- US-A1- 2007 166 494

## Description

### TECHNICAL FIELD OF THE INVENTION

The present invention relates to a vapour deposition barrier coated thermo-mechanically stable, heat sealable polymer film, comprising mainly polyethylene polymers, especially to a metallised such film. The invention also relates to a packaging laminate comprising the vapour deposition coated polymer film and to a packaging container produced from such a packaging laminate. The invention further relates to a method for the production of the thermo-mechanically stable, heat sealable polymer film.

### BACKGROUND OF THE INVENTION

Packaging containers of the single use disposable type for liquid foods are often produced from a packaging laminate based on paperboard or carton. One such commonly occurring packaging container is marketed under the trademark Tetra Brik Aseptic® and is principally employed for aseptic packaging of liquid foods such as milk, fruit juices etc, sold for long term ambient storage. The packaging material in this known packaging container is typically a laminate comprising a bulk core layer of paper or paperboard and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable adhesive polymers and/or polyolefins. Also on the outside of the core layer, there is an outermost heat sealable polymer layer. The heat-sealable polymer layers are preferably based on low density ethylene polymers, for providing a quick, reliable sealing process of the packaging material into packaging containers. With low density ethylene polymers suitable for heat sealing are meant polyethylenes with densities below 0.940 g/cm3, including low density polyethylene (LDPE) which has a density in the range of 0.910 - 0.940 g/cm3, linear low density polyethylenes (LLDPE) or variants thereof, e.g. metallocene-catalysed LLDPE (m-LLDPE). Packages having outer layers from such low density ethylene polymers are easy to seal in a quick and reliable heat sealing process, into strong and durable packaging containers.

The packaging containers are generally produced by means of modern, high-speed packaging machines of the type that continuously form, fill and seal packages from a web or from prefabricated blanks of packaging material, e.g. Tetra Brik Aseptic®- type packaging machines. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean circumstances such that the filled package may be stored for a long time even at ambient temperature, without the risk of growth of micro-organisms in the filled product. Another important advantage of the Tetra Brik® -type packaging method is, as stated above, the possibility of continuous high-speed packaging, which has considerable impact on cost efficiency.

A layer of an aluminium foil in the packaging laminate provides barrier properties quite superior to most polymeric barrier materials. The conventional aluminium-foil based packaging laminate for liquid food aseptic packaging is the most cost-efficient packaging material, at its level of performance, available on the market today. Any other material to compete must be more cost-efficient regarding raw materials, have comparable food preserving properties and have a comparably low complexity in the conversion into a finished packaging laminate.

Hitherto, there are hardly any aseptic paper- or paperboard-based packages for long-term ambient storage of the above described kind available on the market, from a cost-efficient, non-foil packaging laminate, as compared to aluminium-foil laminates, that have a reliable level of barrier properties and food preservation properties for more than 3 months.

Among the efforts of developing more cost-efficient packaging materials and minimizing the amount of raw material needed for the manufacturing of packaging materials, there is a general incentive towards developing pre-manufactured films having multiple barrier functionalities, which may replace the aluminium-foil. Previously known such examples are films combining multiple layers, which each contribute with complementing barrier properties to the final film, such as for example films having a vapour deposited barrier layer and a further polymer-based barrier layer coated onto the same substrate film. Such films, which have been coated at least two times with different coating methods, tend, however, to become very expensive and involve very high demands on the qualities of the substrate film, such as thermal resistance and handling durability.

On the other hand, to optimise the packaging laminate, the production of the same and the packaging container, there is an incentive, in addition to lowering the raw material costs, to simplify the structure of the packaging laminate, to decrease the number of conversion steps needed and, at the same time, to provide a packaging laminate that has sufficient barrier and food preserving properties.

Another, method of including two functionalities in the same film, is to include a heat sealable layer for heat sealing of a packaging material in the film on a first side, and a barrier layer on the other side. One example of such a film is known from the earlier filed International patent application No. WO-A-2006/027662, which describes a polymer film comprising a gas barrier coating of SiOx coated onto a first side of a polymer carrier layer having also a polyolefin layer arranged on a second side of said polymer carrier layer. It further describes packaging laminates made there from and packaging containers wherein the heat sealable polyolefin layer is in direct contact with the contents thereof. It discloses also, a method for the production of a polymer film comprising a gas barrier coating of SiOx, which method comprises the steps of:
a) forming a polymer carrier layer and a heat sealable polyolefin layer, and joining these layers together to form an intermediate film;
b) directly applying said coating of SiOx onto said polymer carrier layer, to form said film,
and preferably, after step (a) but before step (b), an intermediate step of orienting, preferably mono-orienting, said intermediate film by stretching.

The polymer carrier layer is exemplified as a polyamide- or a polyester-based polymer, preferably a polyamide, because it adds some barrier properties itself and provides a good receiving surface and thermo-mechanical properties for subsequent coating with SiOx.

Such a SiOx -coated film is, however, more difficult to manufacture in that the film incorporates two such different types of polymers as polyamide or polyester on the one side of the carrier layer film, and polyethylene on the other side of the film, which results in tensions and less compatible thermal behaviour between the layers within the film. This puts high demands on the manufacturing process in order to provide sufficiently reliant barrier and integrity properties and does, contrary to what was intended, add quite some complexity in the material conversion process as a whole.

### OBJECT OF THE INVENTION

It is therefore an objective of the present invention to provide a vapour deposition barrier coated, thermo-mechanically stable, heat sealable polymer film and a packaging laminate that helps to alleviate the above discussed disadvantages and problems and which fulfil at least some of the above requirements, preferably all of them.

Accordingly, it is an objective of the present invention to provide a thin, pre-manufactured, thermo-mechanically stable and heat sealable polymer substrate film which is vapour deposition coated, preferably metallised, with a barrier layer, suitable for use in a packaging laminate/container, which vapour deposition coated substrate film combines a desired barrier property, such as gas barrier, water vapour barrier or non-scalping barrier property, a low density ethylene polymer heat sealing layer included in the polymer substrate film, a high strength and thermomechanical stability in coating and laminating the film, and lower costs.

A packaging laminate comprising the vapour deposition coated heat sealable polymer film of the invention is suitable for aseptic packaging and long-term storage, and has sufficient bending stiffness and thermo-mechanical stability to be suitable for continuous, high speed packaging of liquid foods by means of a continuous tube-forming and heat-sealing method.

The invention is also directed to a packaging container, with good integrity, i.e. resistant to leakage through seals and seams, filled with semi-liquid or liquid food or beverage and produced from the packaging laminate comprising the heat sealable polymer film of the invention.

These and other objectives are achieved by means of the thermo-mechanically stable, heat sealable polymer film, vapour deposition coated with a barrier layer, the packaging laminate and the packaging container employing said film, and by the method for the production of the vapour deposition coated, thermo-mechanically stable, heat sealable polymer film according to the invention, as defined in the appended claims.

Accordingly, the present invention provides a thermo-mechanically stable, heat sealable, polymer film, suitable for liquid carton packaging material lamination and heat-seal packaging, comprising a core layer consisting of polyethylene and comprising more than 40 weight-% of a polyethylene selected from the group consisting of MDPE, HDPE, modified MDPE, modified HDPE, and blends of two or more thereof, modified meaning polymer grades that have been modified in the polymerisation process to include two components having different molecular weight characteristics, i.e. not a physical blend but a polymerised composition of two kinds of polymers, having a so-called bi-modal or multi-modal molecular weight distribution, which is achievable by a multistep polymerisation process, wherein the different steps are carried out under different reaction conditions, the film further having a heat sealing layer, comprising mainly low density ethylene polymers selected from the group consisting of LDPE, LLDPE, metallocene-catalysed LLDPE (m-LLDPE) and blends of two or more thereof, the heat sealing layer being contiguous to the core layer on a first side, the core layer further having a coating-receiving layer (14), applied in contiguous contact with its second, opposite, side, underneath a vapour deposition barrier coating (13) of 5-200 nm thickness, the coating-receiving layer comprising in the majority a metallocene-catalysed ethylene polymer selected from the group consisting of m-LLDPE, m-HDPE and m-MDPE, and the polymer film having a total thickness of from 12 to 20 µm, preferably from 14 to 18 µm.

More preferably, the total thickness of the polymer film is from 15 to 17 µm.

With modified HDPE and modified MDPE is thus meant polymer grades that have been modified in the polymerisation process to include two components having different molecular weight characteristics, i.e. not a physical blend, but a polymerised composition of two kinds of polymers. Such polymer compositions have a so-called bi-modal or multi-modal molecular weight distribution, and may have advantages over physical, melt blended compositions of two different polymers. Such multi-modal compositions may be achieved by a multi-step polymerisation process, wherein the different steps are carried out under different reaction conditions, e.g. using different catalyst systems etc.

According to one embodiment of the invention, the thin vapour deposited coating is a layer of metal or metal oxide, preferably aluminium metal, i.e. a so called metallised layer.

A metallisation layer, or ceramic layer, consisting of a thin coating comprising a metal or metal oxide, is preferably applied by means of vacuum deposition, but may less preferably be applied also by other methods generally known in the art having a lower productivity, such as electroplating or sputtering. The most preferred metal according to the present invention is aluminium, although any other metal capable of being vacuum deposited, electroplated or sputtered may be used according to the invention. Thus, less common metals such as Au, Ag, Cr, Zn, Ti or Cu are conceivable also. Generally, thin coatings of pure metal or a mixture of metal and metal oxide provide barrier properties against water vapour and are used when the desired function is to prevent water vapour from migrating into and through the multilayer film or packaging laminate. Most preferably, the metal in a metallisation coating is aluminium (Al).

Examples of ceramic coatings suitable as functional coatings according to the invention are SiOx coatings also containing carbon in their formula and AlOx coatings, MgOx coatings also being conceivable. This type of coatings provide gas barrier properties to the coated multilayer film as well as some degree of water vapour barrier properties, and are transparent coatings, which may be preferred in some cases.

One coating embodiment is a coating of aluminium oxide having the formula AlOx wherein x varies from 1.0 to 1.5, preferably of Al₂O₃. Preferably, the thickness of such a coating is from 5 to 100 nm, preferably from 5 to 30 nm.

Preferably, these ceramic coatings are applied by means of physical vapour deposition (PVD) or reactive evaporation deposition or by plasma enhanced chemical vapour deposition method (PECVD), wherein metal or silicon vapour is deposited onto the substrate under oxidising circumstances, thus forming an amorphous metal oxide or silicon oxide layer.

Other silicon oxide-based coatings, are coatings of SiOxCy and SiOₓC_{y}N_{z}. Such coatings often provide good gas barrier properties, and in some cases also water vapour barrier properties.

The core layer further has a coating-receiving layer, applied contiguous to and in contact with its second, opposite side, underneath the coating, also consisting of polyethylene and being aimed for receiving the vapour deposition coating layer.

Such a receiving layer improves considerably the adhesion and cohesion of a vapour deposited, especially metallised, layer applied onto the polymer substrate film. High adhesion of the metallised layer to the substrate film is needed in order for the metallised layer to stay intact and unaffected during heat extrusion lamination with further layers into a packaging laminate and in order to provide sufficient integrity properties in a finished packaging container manufactured from the packaging laminate, thus enabling good barrier properties in a final laminate including the metallised film.

The thickness of the receiving layer is from about 0,5 to about 5, preferably from 1 to 4 µm.

The heat sealing layer mainly comprises low density ethylene polymers, and are according to one embodiment selected from the group consisting of LDPE, LLDPE, metallocene-catalysed LLDPE (m-LLDPE), and blends of two or more thereof. The low density polyethylenes have by definition a density in the range between 0.910 and 0.940 g/cm3, while linear low density polyethylenes are defined by a density range of 0.915-0.925 g/cm3. LDPE (non-linear low density polyethylene) has a high degree of chain branching, while LLDPE's have mostly short chain branches.

According to one particular embodiment, the heat sealable, innermost layer comprises a material in the group that consists of linear low density polyethylene (LLDPE), or metallocene-polymerised LLDPE, in combination with preferably up to 30, preferably up to 20, weight-% of a conventional low density polyethylene (LDPE), based on the total weight of the heat sealable layer.

According to one embodiment, the polymer film is a blown film, i.e. a film manufactured by means of film extrusion blowing technology and subsequent vapour deposition coating. Alternatively, a similar film may be produced by means of extrusion casting technology. The film blowing process provides for better mechanical properties obtained in the films, due to higher degree of orientation of the polymers than in films produced by an extrusion casting process.

The linear alignment of the polymer molecules within the thin receiving layer of an LLDPE provides for a clean surface with less presence of migrating low molecular compounds and therefore, for better conditions for good adhesion and cohesion to and within the vapour deposition layer. Moreover, LLDPE's have shorter chain branches, why crosslinks within the polymer layer are shorter and thereby the thermal resistance of the layer is higher than for e.g. LDPE in the lower density ranges. Thermal stability in the subsequent coating process is good in order to avoid, as far as possible, movements and tension forces in the film during the coating process.

The coating- or metal-receiving layer comprises in the majority a polymer selected from the group consisting of metallocene-catalysed ethylene polymers. Such metallocene-catalysed ethylene polymers are selected from the group consisting of m-LLDPE, m-HDPE and m-MDPE. Such metallocene-catalysed polyethylenes likewise provide for better thermal resistance and a clean surface, substantially without migrating low molecular compounds, thus providing for better conditions for good adhesion and cohesion to and within the vapour deposition layer.

A good balance of processing properties and surface characteristics of the film is achieved if the metallocene-catalysed polyethylene is blended with a non-metallocene-catalysed polyethylene within the same density category.

Thus, according to one specific embodiment, providing good surface and adhesion properties, the metal receiving layer comprises a blend of m-HDPE and HDPE. Suitably, such a blend comprises from about 70 to about 80 weight-% of m-HDPE and from about 20 to about 30 weight-% of HDPE. According to an alternative such embodiment, the metal receiving layer comprises a blend of about 30 weight-% m-LLDPE and about 70 weight-% LDPE.

The core layer in itself may be a multilayer structure with layers of the same or similar polyethylene or polyethylene blend, i.e. up to five, normally three, layers of the same basic high or medium density polyethylene material. Here, it should be understood that e.g. high or medium density polyethylene materials of all grades, including metallocene-catalysed high or medium density polyethylenes (m-HDPE, m-MDPE), may be included as single components, as blends with each other, or as blends with lower density polyethylenes, in each layer. Medium density polyethylenes are defined by having a density of from 0.926 to 0.940 g/cm3. High density polyethylene has a density of greater or equal to 0.941 g/cm3. The composition of each layer may be different from the other layers, or the same. By gradually changing a certain property between the layers, such as for example bending stiffness or crystallinity, a tailor-made property profile through the cross-section of the core layer may be provided.

According to the embodiment wherein the barrier coating layer is an aluminium metal layer, the metallised layer provides good barrier properties at an optical density (OD) of from 1.8 to 3.0, preferably from 2.0 to 2.7, more preferably from 2.2 to 2.6. At an optical density lower than 1.8, the barrier properties of the metallised film are too low. At above 3.0, on the other hand, the metallisation layer becomes too brittle, and the thermo stability during the metallisation process will be too low due to higher heat load when metallising the substrate film during a longer time. The coating quality and adhesion will then be clearly negatively affected. An optimum has, thus, been found between these values, preferably between 2.0 and 2.7.

Generally, the vapour deposition coating of a barrier layer onto the polymer film in the final step, is carried out by means of a continuous method of physical or chemical vapour deposition. Various coatings of ceramic or metal composition may be applied by this type of methods. Generally, the thickness of such vapour deposited coatings may vary between 5 and 200 nm. Below 5 nm the barrier properties may be too low to be useful and above 200 nm, the coating is less flexible and, thus, more prone to cracking when applied onto a flexible substrate.

In order to provide sufficient integrity of a packaging container produced from a vapour deposition coated, especially metallised, film according to the invention, the vapour deposition coated layer has an adhesion of at least 200, preferably at least 300 N/m (according to the seal-and-peel test method proposed by the AIMCAL association for adhesion of metallised layers).

The sufficient adhesion is obtained partly by means of a surface treatment process, in order to activate the surface before vapour deposition, especially metallisation, coating. Possible such surface activation treatments are, for example, corona and plasma treatments. Plasma surface treatment is preferred since it is possible to carry out in connection with the metallisation process and because it provides excellent surface properties for subsequent vapour deposition coating. Regarding some combinations of types of skin receiving layer polymers and vapour deposition coatings, even surface treatment by flame may work well.

Preferably, the film according to the invention has an oxygen transmission rate lower than 100 cm³/(m²*24h), 1 atmosphere O₂, 23 °C, 50% RH.

More preferably, a metallised film according to the invention has an oxygen transmission rate lower than 100 cm³/(m²*24h), 1 atm O₂, 23 °C, 50% RH, and a water vapour permeation rate of lower than 5, preferably lower than 1 g/m² at 38 (and 23) °C, 24 hours, at a gradient of from 0 to 90 % RH.

The oxygen transmission was tested in a Mocon 2/20 OTR measurement equipment at 20 % oxygen and corrected by a factor 5, to 100 % oxygen. For determining the water vapour barrier, a method based on ASTM F-1249-06, using a modulated Infrared sensor for relative humidity detection and water vapour transmission rate (WVTR) measurement, was used.

It is also possible to include processing aids and handling additives into the polymers, such as anti-blocking agents and/ or slip agents into the polymers included in the film of the invention.

The invention also relates to a packaging laminate comprising a film according to the invention. The packaging laminate further comprises a paper or paperboard bulk layer arranged to provide for the greatest contribution to the flexural rigidity of the laminate.

It is intended that the heat sealable, low density ethylene polymer layer of the pre-manufactured film forms a free surface of the packaging laminate, which surface is intended for food contact, as it directly faces the interior of a packaging container formed from the packaging laminate to be filled with a food product. However, it may be conceived, although less preferred for cost reasons, that one or more additional heat sealable layers is/are applied onto the film in connection with its incorporation in the packaging laminate, in which case the outermost additional heat sealable layer on the inside of the container is intended for direct food contact.

Furthermore, the packaging laminate comprises one or more outer heat sealable polyolefin layer(s) arranged on an opposite side of the bulk or core layer. Such outer heat sealable polyolefin layer(s) will directly face the surrounding environment of the packaging container.

According to a preferred embodiment, the packaging laminate comprises one or more additional oxygen barrier layers between the paperboard layer and the heat sealable, vapour deposited barrier film of the invention. Well-functioning and cost-effective examples of such oxygen barrier layers are barrier layers applied to the paper or paperboard layer by means of liquid film coating of a dispersion or solution of a polymer having gas barrier properties, or similar dispersions of laminar inorganic compounds such as talcum or nano-clay filler particles. Preferable oxygen barrier layers obtained in this way comprise both an oxygen barrier polymer and such an inorganic filler compound. Well working examples of such oxygen barrier polymers suitable for liquid film coating are polyvinyl alcohol (PVOH), aqueous dispersible ethylene vinyl alcohol polymer (EVOH), starch and starch derivatives. Most preferred such polymers are PVOH.

The packaging container formed from the packaging laminate according to the invention may be of any known shape. Preferably, it is a brick- or wedge-shaped container that is durable at handling and distribution and resistant to moisture and oxygen gas during long term storage, due to the high quality packaging laminate, which in turn also provides for high seal quality and excellent gas barrier properties. A further important advantage of packaging containers produced from the packaging laminate according to the invention is that they may be durable to microwave cooking or thawing. Alternatively, a packaging container may be of the type pillow-shaped fibre pouch such as the packaging container known under the trademark Tetra Fino®.

According to a further aspect of the invention, a method for the manufacturing of a thermo-mechanically stable, heat sealable, barrier coated polymer film of the invention is provided. The method comprises the steps of:
a) forming a polymer film at a thickness of from 12 to 20 µm, preferably from 14 to 18 µm, by means of an extrusion manufacturing method, the polymer film comprising a core layer consisting of polyethylene, and comprising more than 40 weight-% of a polyethylene selected from the group consisting of MDPE, HDPE, modified MDPE,modified HDPE and blends of two or more thereof, modified meaning polymer grades that have been modified in the polymerisation process to include two components having different molecular weight characteristics, i.e. not a physical blend but a polymerised composition of two kinds of polymers, having a so-called bimodal or multi-modal molecular weight distribution, which is achievable by a multistep polymerisation process, wherein the different steps are carried out under different reaction conditions, the polymer film further comprising a heat sealing layer, comprising mainly low density ethylene polymers selected from the group consisting of LDPE, LLDPE , metallocene-catalysed LLDPE (m-LLDPE) and blends of two or more thereof, which is laminated to the core layer on a first side and the core layer further having a coating-receiving layer, being applied in contiguous contact with its second, opposite, side, and comprising in the majority a metallocene-catalysed ethylene polymer selected from the group consisting of m-LLDPE, m-HDPE and m-MDPE, and subsequently
b) vapour depositing a barrier coating, preferably a metal coating, onto one side of the film. A coating- receiving layer is laminated on the side of the core layer which will be directed towards and receiving the vapour deposition coated layer.

According to one embodiment of the invention the method further comprises the step of:
c) surface treating the side of the polymer film to be vapour deposition coated, before the step b) of vapour depositing the barrier coating.

Preferably, the polymer film is manufactured by extrusion film-blowing technology.

According to an embodiment of the invention the vapour deposition coated layer is a metallised layer. Preferably, the metallised layer is vapour deposited to an optical density (OD) of from 1.8 to 3.0, preferably from 2.0 to 2.7, more preferably from 2.2 to 2.6.

### DESCRIPTION OF THE DRAWINGS

Further advantages and favourable characterising features of the present invention will be apparent from the following detailed description, with reference to the appended figures, in which:
Fig. 1a and 1b show cross-sectional views of vapour deposition barrier coated thermo-mechanically stable, heat sealable polymer films according to the present invention,
Fig. 2a is a cross-sectional view of a laminated packaging material according to the present invention, including a vapour deposition coated heat sealable polymer film according to the invention, as described in connection with Fig. 1,
Fig. 2b shows how the packaging laminate exemplified in Fig. 2a may be manufactured according to the invention,
Fig. 3 is a diagrammatic view of a plant for co-extrusion blowing the polymer film of the invention,
Fig. 4 is a diagrammatic view of a plant for metal or metal oxide coating of the polymer film as shown in Fig. 1a and 1b.
Fig. 5a shows an example of a packaging container produced from the packaging laminate according to the invention,
Fig. 5b shows a second example of a packaging container produced from the packaging laminate according to the invention, and
Fig. 6 shows the principle of how such packaging containers are manufactured from the packaging laminate in a continuous forming, filling and sealing process.

### DESCRIPTION OF PREFERRED EMBODIMENTS

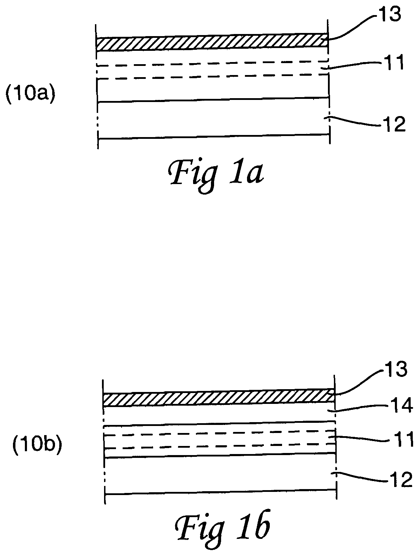

Fig. 1a shows a vapour deposition coated thermo-mechanically stable, heat sealable polymer substrate film 10a, composed of a core layer 11 consisting of polyethylene and comprising more than 40 weight-% of a polyethylene selected from medium and high density polyethylenes, and a heat sealing layer 12, which is adjacent, i.e. contiguous to, the core layer on one side, and which consists of LLDPE having a density of from 0,915 to 0,925. Onto the other side of the core layer, a thin vapour deposition layer having the function of a barrier layer 13, especially a metallised layer of aluminium, is coated. The total thickness of the polymer substrate film 10a is about 17 µm and the thickness of the heat sealing layer is about 7-8 µm. The film has lower shrink than 3 %, preferably lower than 2 % (measured at 80 °C).

Fig. 1b shows a vapour deposition barrier- coated thermo-mechanically stable and heat sealable film 10b, which is achieved by vapour deposition coating an aluminium metal coating 13 onto a receiving layer 14, further applied onto the other side of the core layer 11 in the polymer film of Fig. 1a. The aluminium metallisation layer 13 has an optical density of from about 2,0 to about 2,7. The total thickness of the polymer substrate film 10b is about 17 µm and the thickness of the receiving layer is about 4 µm. The thickness of the core layer is about 7 µm (may be from 6 to 10 µm), while the heat sealing layer is about 6 µm thick (may be from 3 to 7 µm thick). The film has lower shrink than 3 %, preferably lower than 2 % (measured at 80 °C).

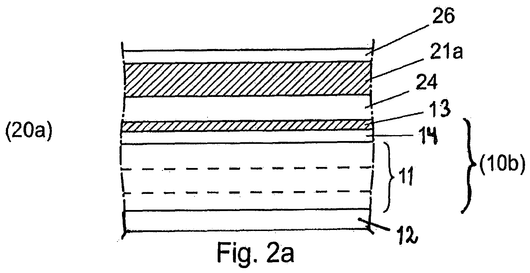

Fig. 2a shows a packaging laminate 20a, comprising a vapour deposition coated film 10b as described in Fig. 1b, laminated by means of at least one intermediate bonding layer 24 to a bulk paper or paperboard layer 21a. The intermediate bonding layer is preferably a thermoplastic polymer extrusion lamination layer and may include one or more additional layers such as for example thermoplastic polymer oxygen barrier layers. The layers may then be coextruded together in the operation of laminating the film 10b and the paperboard layer 21a together. Alternatively, there may be a barrier layer coated or pre-laminated onto the paperboard 21a, before lamination to the heat sealable barrier film 10b.

The thickest layer in the laminate is a bulk paper or paperboard layer 21a. Any paper or paperboard suitable for liquid carton-based packaging may be employed for the bulk layer 21a. It should be noted that the laminate layers in Fig. 2a do not reflect the fact that the thickness of the vapour deposition film 10b is significantly thinner than, or at least as thin as, the paper bulk layer 21a.

On the outside of the paper or paperboard layer, which will constitute the outside wall of a packaging container produced from the packaging laminate, is applied an outermost layer 26 of a heat-sealable polyolefin, such as preferably a low density polyethylene (LDPE) or a linear low density polyethylene (LLDPE), which may include also so-called metallocene-catalysed LLDPE's (m-LLDPE), i.e. LLDPE polymers catalysed by means of a single site catalyst, or blends of two or more such heat sealable polyolefins.

It is to be understood that the packaging laminate shown in Fig. 2a should be seen as a mere example, from which the person skilled in the art will have no problems in deducing a variety of other embodiments.

The packaging laminate 20a according to the invention can be produced according to any suitable prior art principle known to the skilled person. Preferably, however, with reference to the laminate shown in Fig. 2a, the binding layer 24 may be extruded into a laminator nip, between the paper or paperboard bulk layer 21a and the pre-manufactured metallised film 10b. The metallised layer is preferably treated by flame, plasma or corona treatment before being laminated to the paper or paperboard bulk layer. Finally the outermost layer 26 of a heat-sealable polyolefin is extruded onto the paper or paperboard bulk layer 21a.

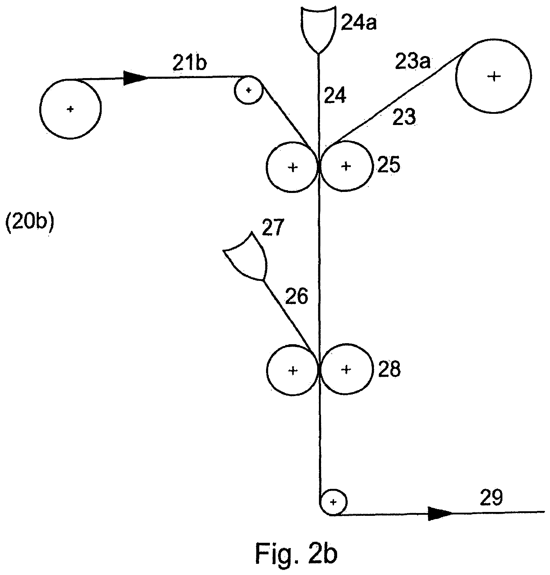

In Fig. 2b, the lamination process 20b is shown, wherein the paper or paperboard layer 21b, which may, according to one preferred embodiment of the invention, be coated with an oxygen barrier from a liquid dispersion or solution of a polymer having oxygen barrier properties and subsequently dried, is laminated to a vapour deposited substrate polymer film 23, having a thin vapour deposited coating 23a on the side facing towards the paper layer, by extruding an intermediate bonding layer of LDPE 24 from an extrusion station 24a and pressing together in a roller nip 25. In the case of a metallised vapour deposition coating, the contacting surface of the substrate film, or of the receiving layer, is pre-treated by a surface treatment (not shown) before pressing the layers together in the nip. Subsequently, the laminated paper and film passes a second extruder 27 and lamination nip 28, where an outermost heat sealable layer of LDPE 26 is coated onto the outer side of the paper layer. Finally, the finished packaging laminate 29 is wound onto a storage reel, not shown.

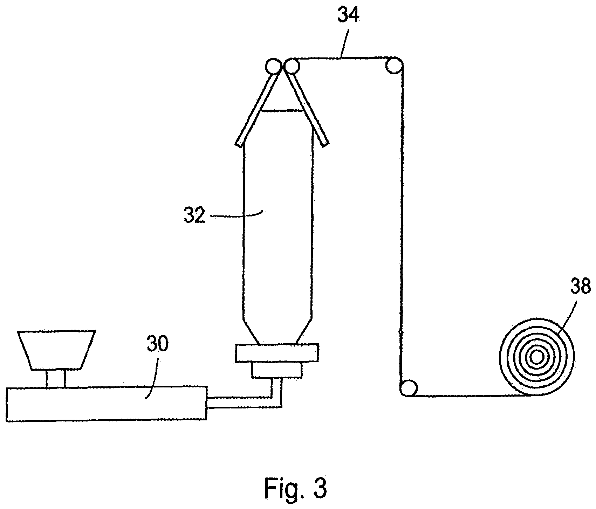

Fig. 3 is a diagrammatic view of a plant for (co-)extrusion blowing of an intermediate film, i.e. the substrate polymer film before being vapour deposition coated by a metal or by an inorganic metal compound. The one or more layers of the substrate polymer film are (co-)extruded from one or more extruders 30 and blown 32, to form a film 34 of relatively high thickness.

Other methods of forming the polymer non-oriented film, such as co-extrusion casting, may also be contemplated as possible by the person skilled in the art.

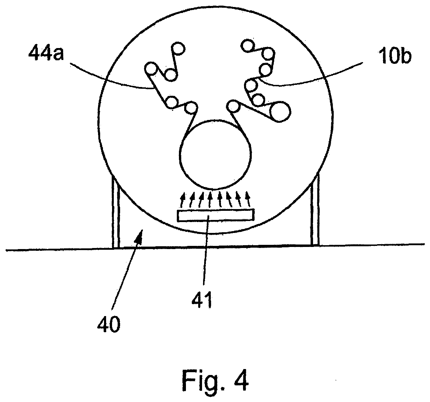

Fig. 4, is a diagrammatic view of an example of a plant for vapour deposition coating of the intermediate film produced in Fig. 3. The film 34a from Fig. 3 is subjected, on the coating receiving side, to continuous evaporation deposition 40, of a metallised layer of aluminium, possibly in a mixture with aluminium oxide, and the coating is given a thickness of 5-100 nm, preferably 5-50 nm, so that the coated film 10b of the invention is formed. The aluminium vapour comes from a solid piece evaporation source 41.

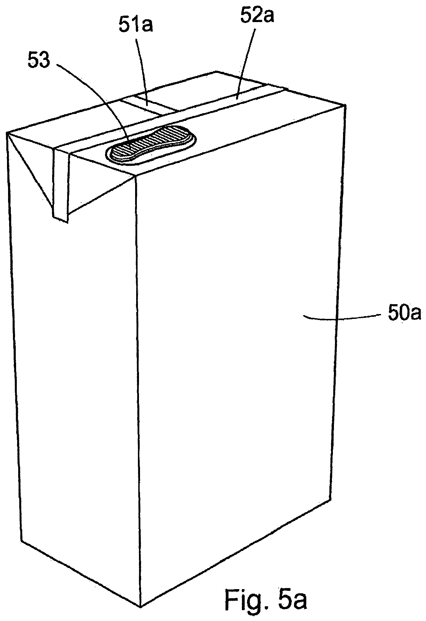

Fig. 5a shows a preferred example of a packaging container 50a produced from the packaging laminate 20a according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the half-folded packaging container is still is easy to handle and dimensionally stable when put on a shelf in the food store or on a table or the like.

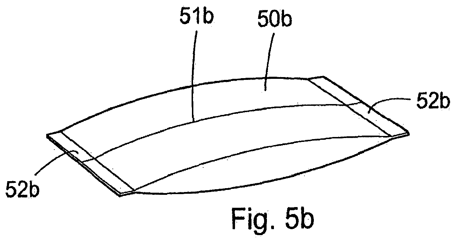

Fig. 5b shows an alternative, preferred example of a packaging container 50b produced from a packaging laminate 20a according to the invention. Since the packaging laminate 20a according to this embodiment is thinner by having a thinner paper core layer, it is not dimensionally stable enough to form a parallelepipedic or wedge-shaped packaging container, and is not fold formed after transversal sealing 52b. It will thus remain a pillow-shaped pouch-like container and distributed and sold like this.

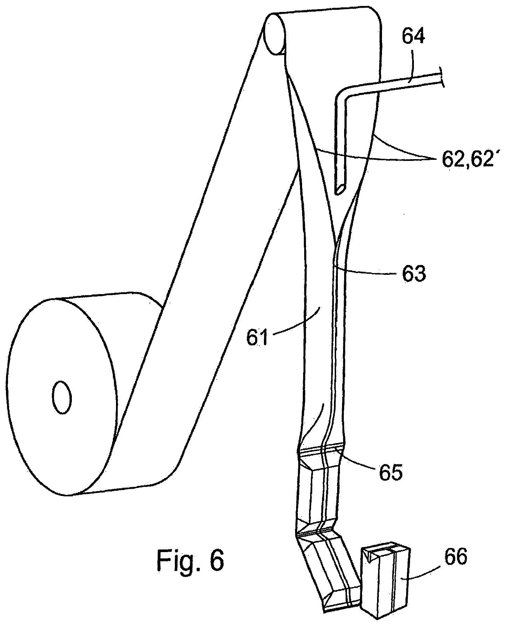

Fig. 6 shows the principle as described in the introduction of the present application, i.e. a web of packaging material is formed into a tube 61 by the longitudinal edges 62, 62' of the web being united to one another in an overlap joint 63. The tube is filled 64 with the intended liquid food product and is divided into individual packages by repeated transversal seals 65 of the tube at a predetermined distance from one another below the level of the filled contents in the tube. The packages 66 are separated by incisions in the transversal seals and are given the desired geometric configuration by fold formation along prepared crease lines in the material.

## Claims

1. A thermo-mechanically stable, heat sealable, polymer film (10a; 10b), suitable for liquid carton lamination and heat-seal packaging, comprising a core layer (11) consisting of polyethylene and comprising more than 40 weight-% of a polyethylene selected from the group consisting of MDPE, HDPE, modified MDPE, modified HDPE, and blends of two or more thereof, modified meaning polymer grades that have been modified in the polymerisation process to include two components having different molecular weight characteristics, i.e. not a physical blend but a polymerised composition of two kinds of polymers, having a so-called bi-modal or multi-modal molecular weight distribution, which is achievable by a multistep polymerisation process, wherein the different steps are carried out under different reaction conditions, the film further having a heat sealing layer (12), comprising mainly low density ethylene polymers selected from the group consisting of LDPE, LLDPE , metallocene-catalysed LLDPE (m-LLDPE) and blends of two or more thereof, the heat sealing layer being contiguous to the core layer on a first side, the core layer further having a coating-receiving layer (14), applied in contiguous contact with its second, opposite, side, underneath a vapour deposition barrier coating (13) of 5-200 nm thickness, the coating-receiving layer comprising in the majority a metallocene-catalysed ethylene polymer selected from the group consisting of m-LLDPE, m-HDPE and m-MDPE, and the polymer film having a total thickness of from 12 to 20 µm.

2. A thermo-mechanically stable, heat sealable, polymer film (10a; 10b), as claimed in claim 1, wherein the thin vapour deposition coating (13) is a layer of metal or metal oxide, preferably aluminium metal.

3. A thermo-mechanically stable, heat sealable, polymer film (10a; 10b), as claimed in any one of the preceding claims, wherein the film is a blown film, i.e. a film manufactured by means of film blowing technology and subsequent vapour deposition coating.

4. A thermo-mechanically stable, heat sealable, polymer film (10a; 10b), as claimed in any of the preceding claims , wherein the metallocene-catalysed polyethylene of the coating-receiving layer is blended with a non-metallocene-catalysed polyethylene within the same density category.

5. A thermo-mechanically stable, heat sealable, polymer film (10a; 10b), as claimed in claim 4, wherein the coating-receiving layer comprises a blend of m-HDPE and HDPE.

6. A thermo-mechanically stable, heat sealable, polymer film (10a; 10b), as claimed in any one of claims 2-5, wherein the metallised layer (13) has an optical density (OD) of from 1.8 to 3.0, preferably from 2.0 to 2.7, more preferably from 2.2 to 2.6.

7. A thermo-mechanically stable, heat sealable, polymer film (10a; 10b), as claimed in any one of claims 2-6, wherein the metallised layer (13) has an adhesion of at least 200 N/m, preferably at least 300 N/m.

8. A thermo-mechanically stable, heat sealable, polymer film (10a; 10b), as claimed in any one of the preceding claims, wherein the film has an oxygen transmission rate lower than 100 cm³/(m²*24h), 1 atm O₂, 23 °C, 50% RH.

9. A thermo-mechanically stable, heat sealable, polymer film (10a; 10b), as claimed in any one of the preceding claims, wherein the film has a water vapour permeation rate of lower than 5, preferably lower than 1 g/m² at 38, and 23, °C, 24 hours, at a gradient of from 0 to 90 % RH.

10. A packaging laminate (20a) comprising a film (10a; 10b), according to any one of claims 1-9, also comprising a paper or paperboard core layer (21a).

11. A packaging laminate according to claim 10, wherein said heat sealable polymer film (10a; 10b) forms a surface of the packaging laminate (20a) intended to form an interior surface of a package made from said packaging laminate.

12. A packaging laminate according to any one of claims 10 -11, wherein a further oxygen barrier layer is arranged between the paperboard (21a) and the heat sealable polymer film (10a; 10b).

13. A liquid packaging container (50a; 50b) formed from a packaging laminate (20a) according to any one of claims 10-12.

14. A method for the manufacturing of the barrier coated, thermo-mechanically stable, heat sealable, polymer film, as claimed in any one of claims 1-9, which method comprises the steps of:
a) forming a polymer film (34) at a thickness of from 12 to 20 µm, preferably from 14 to 18 µm, by means of an extrusion manufacturing method (30, 32), the polymer film comprising a core layer (11) consisting of polyethylene, and comprising more than 40 weight-% of a polyethylene selected from the group consisting of MDPE, HDPE, modified MDPE,modified HDPE and blends of two or more thereof, modified meaning polymer grades that have been modified in the polymerisation process to include two components having different molecular weight characteristics, i.e. not a physical blend but a polymerised composition of two kinds of polymers, having a so-called bi-modal or multi-modal molecular weight distribution, which is achievable by a multistep polymerisation process, wherein the different steps are carried out under different reaction conditions the polymer film further comprising a heat sealing layer (12) comprising mainly low density ethylene polymers selected from the group consisting of LDPE, LLDPE , metallocene-catalysed LLDPE (m-LLDPE) and blends of two or more thereof, which is laminated to the core layer on a first side , and the core layer further having a coating-receiving layer (14), being applied in contiguous contact with its second, opposite, side, and comprising in the majority a metallocene-catalysed ethylene polymer selected from the group consisting of m-LLDPE, m-HDPE and m-MDPE, and subsequently
b) vapour depositing (40) a barrier coating onto the other, second side of the film, onto the coating-receiving layer.

15. A method for the manufacturing of a barrier coated, thermo-mechanically stable, heat sealable, polymer film, as claimed in claim 14, which method further comprises the step of:
c) surface treating the second side of the polymer film to be vapour deposition coated, before the step b) of vapour depositing the barrier coating.

16. A method according to any one of claims 14-15, wherein the vapour deposition coated layer is a metallised layer.

17. A method according to claim 16, wherein the metallised layer is vapour deposited to an optical density (OD) of from 1.8 to 3.0, preferably from 2.0 to 2.7, more preferably from 2.2 to 2.6.

## Patentansprüche

1. Thermo-mechanisch stabiler, heißsiegelfähiger Polymerfilm (10a; 10b), der für Flüssigkeitskartonlamination und Heißsiegelverpackung geeignet ist, umfassend eine Kernschicht (11), die aus Polyethylen besteht und mehr als 40 Gew.-% an einem Polyethylen ausgewählt aus der Gruppe bestehend aus MDPE, HDPE, modifiziertem MDPE, modifiziertem HDPE und Gemischen von zwei oder mehr davon umfasst, wobei modifiziert Polymersorten bedeutet, die bei dem Polymerisationsverfahren modifiziert worden sind, um zwei Komponenten mit unterschiedlichen Molekulargewichtscharakteristika zu enthalten, d. h. nicht ein physikalisches Gemisch, sondern eine polymerisierte Zusammensetzung von zwei Arten von Polymeren mit einer so genannten bimodalen oder multimodalen Molekulargewichtsverteilung, die durch ein mehrstufiges Polymerisationsverfahren erhältlich ist, wobei die verschiedenen Schritte bei unterschiedlichen Reaktionsbedingungen durchgeführt werden, wobei der Film ferner eine Heißsiegelschicht (12) aufweist, die hauptsächlich Ethylenpolymere mit niedriger Dichte ausgewählt aus der Gruppe bestehend aus LDPE, LLDPE, Metallocen-katalysiertem LLDPE (m-LLDPE) und Gemischen von zwei oder mehr davon umfasst, wobei die Heißsiegelschicht an einer ersten Seite an die Kernschicht angrenzt, wobei die Kernschicht ferner eine Beschichtungsaufnahmeschicht (14) aufweist, die in angrenzendem Kontakt mit seiner zweiten, gegenüberliegenden Seite unterhalb einer Dampfabscheidungs-Sperrbeschichtung (13) mit einer Dicke von 5-200 nm aufgebracht ist, wobei die Beschichtungsaufnahmeschicht zum Großteil ein Metallocen-katalysiertes Ethylenpolymer ausgewählt aus der Gruppe bestehend aus m-LLDPE, m-HDPE und m-MDPE umfasst und der Polymerfilm eine Gesamtdicke von 12 bis 20 µm aufweist.

2. Thermo-mechanisch stabiler, heißsiegelfähiger Polymerfilm (10a; 10b) gemäß Anspruch 1, wobei die dünne Dampfabscheidungsbeschichtung (13) eine Schicht aus Metall oder Metalloxid ist, vorzugsweise Aluminiummetall.

3. Thermo-mechanisch stabiler, heißsiegelfähiger Polymerfilm (10a; 10b) gemäß einem der vorstehenden Ansprüche, wobei der Film ein geblasener Film ist, d. h. ein Film, der durch Filmblastechnologie und anschließende Dampfabscheidungsbeschichtung hergestellt ist.

4. Thermo-mechanisch stabiler, heißsiegelfähiger Polymerfilm (10a; 10b) gemäß einem der vorstehenden Ansprüche, wobei das Metallocen-katalysierte Polyethylen der Beschichtungsaufnahmeschicht mit einem nicht-Metallocen-katalysierten Polyethylen aus der gleichen Dichtekategorie gemischt ist.

5. Thermo-mechanisch stabiler, heißsiegelfähiger Polymerfilm (10a; 10b) gemäß Anspruch 4, wobei die Beschichtungsaufnahmeschicht ein Gemisch von m-HDPE und HDPE umfasst.

6. Thermo-mechanisch stabiler, heißsiegelfähiger Polymerfilm (10a; 10b) gemäß einem der Ansprüche 2-5, wobei die metallisierte Schicht (13) eine optische Dichte (OD) von 1,8 bis 3,0 aufweist, vorzugsweise von 2,0 bis 2,7, bevorzugter von 2,2 bis 2,6.

7. Thermo-mechanisch stabiler, heißsiegelfähiger Polymerfilm (10a; 10b) gemäß einem der Ansprüche 2-6, wobei die metallisierte Schicht (13) eine Haftung von wenigstens 200 N/m aufweist, vorzugsweise wenigstens 300 N/m.

8. Thermo-mechanisch stabiler, heißsiegelfähiger Polymerfilm (10a; 10b) gemäß einem der vorstehenden Ansprüche, wobei der Film eine Sauerstofftransmissionsrate von unter 100 cm³/(m²*24 h), 1 atm O₂, 23 °C, 50 % RH, aufweist.

9. Thermo-mechanisch stabiler, heißsiegelfähiger Polymerfilm (10a; 10b) gemäß einem der vorstehenden Ansprüche, wobei der Film eine Wasserdampfdurchlässigkeitsrate von unter 5, vorzugsweise unter 1 g/m² bei 38 und 23 °C, 24 Stunden, bei einem Gradienten von 0 bis 90 % RH aufweist.

10. Verpackungslaminat (20a), umfassend einen Film (10a; 10b) gemäß einem der Ansprüche 1-9, ferner umfassend eine Papier- oder Karton-Kernschicht (21a).

11. Verpackungslaminat gemäß Anspruch 10, wobei der heißsiegelfähige Polymerfilm (10a; 10b) eine Oberfläche des Verpackungslaminats (20a) bildet, die zum Bilden einer Innenoberfläche einer aus dem Verpackungslaminat hergestellten Verpackung vorgesehen ist.

12. Verpackungslaminat gemäß einem der Ansprüche 10-11, wobei eine weitere Sauerstoffsperrschicht zwischen dem Karton (21a) und dem heißsiegelfähigen Polymerfilm (10a; 10b) angeordnet ist.

13. Flüssigkeitsverpackungsbehälter (50a; 50b), gebildet aus einem Verpackungslaminat (20a) gemäß einem der Ansprüche 10-12.

14. Verfahren zur Herstellung des sperrbeschichteten, thermo-mechanisch stabilen, heißsiegelfähigen Polymerfilms gemäß einem der Ansprüche 1-9, welches Verfahren die Schritte umfasst:
a) Bilden eines Polymerfilms (34) mit einer Dicke von 12 bis 20 µm, vorzugsweise von 14 bis 18 µm, mithilfe eines Extrusions-Herstellungsverfahrens (30, 32), wobei der Polymerfilm eine Kernschicht (11) umfasst, die aus Polyethylen besteht und mehr als 40 Gew.-% an einem Polyethylen ausgewählt aus der Gruppe bestehend aus MDPE, HDPE, modifiziertem MDPE, modifiziertem HDPE und Gemischen von zwei oder mehr davon umfasst, wobei modifiziert Polymersorten bedeutet, die bei dem Polymerisationsverfahren modifiziert worden sind, um zwei Komponenten mit unterschiedlichen Molekulargewichtscharakteristika zu enthalten, d. h. nicht ein physikalisches Gemisch, sondern eine polymerisierte Zusammensetzung von zwei Arten von Polymeren mit einer so genannten bimodalen oder multimodalen Molekulargewichtsverteilung, die durch ein mehrstufiges Polymerisationsverfahren erhältlich ist, wobei die verschiedenen Schritte bei unterschiedlichen Reaktionsbedingungen durchgeführt werden, wobei der Polymerfilm ferner eine Heißsiegelschicht (12) umfasst, die hauptsächlich Ethylenpolymere mit niedriger Dichte ausgewählt aus der Gruppe bestehend aus LDPE, LLDPE, Metallocen-katalysiertem LLDPE (m-LLDPE) und Gemischen von zwei oder mehr davon umfasst, die an einer ersten Seite an die Kernschicht laminiert ist, und die Kernschicht ferner eine Beschichtungsaufnahmeschicht (14) aufweist, die in angrenzendem Kontakt mit seiner zweiten, gegenüberliegenden Seite aufgebracht ist und zum Großteil ein Metallocen-katalysiertes Ethylenpolymer ausgewählt aus der Gruppe bestehend aus m-LLDPE, m-HDPE und m-MDPE umfasst, und anschließend
b) Dampfabscheiden (40) einer Sperrschicht auf die andere, zweite Seite des Films auf die Beschichtungsaufnahmeschicht.

15. Verfahren zur Herstellung des sperrbeschichteten, thermo-mechanisch stabilen, heißsiegelfähigen Polymerfilms gemäß Anspruch 14, welches Verfahren ferner den Schritt umfasst:
c) Oberflächenbehandeln der zweiten Seite des Polymerfilms, die durch Dampfabscheidung beschichtet werden soll, vor dem Schritt b) der Dampfabscheidung der Sperrbeschichtung.

16. Verfahren gemäß einem der Ansprüche 14-15, wobei die durch Dampfabscheidung beschichtete Schicht eine metallisierte Schicht ist.

17. Verfahren gemäß Anspruch 16, wobei die metallisierte Schicht auf eine optische Dichte (OD) von 1,8 bis 3,0, vorzugsweise von 2,0 bis 2,7, bevorzugter von 2,2 bis 2,6, dampfabgeschieden wird.

## Revendications

1. Film polymère thermomécaniquement stable, thermoscellable (10a ; 10b), approprié pour la stratification de carton pour liquides et les emballages thermoscellables, comprenant une couche centrale (11) consistant en du polyéthylène et comprenant plus de 40 % en poids d'un polyéthylène choisi dans le groupe constitué par le MDPE, le HDPE, le MDPE modifié, le HDPE modifié, et les mélanges d'au moins deux d'entre eux, modifié signifiant des qualités de polymère qui ont été modifiées dans le procédé de polymérisation pour comporter deux constituants ayant des caractéristiques de poids moléculaire différentes, c.-à-d. pas un mélange physique, mais une composition polymérisée de deux types de polymères, ayant une distribution de poids moléculaire dite bimodale ou multimodale, qui peut être obtenue par un procédé de polymérisation en plusieurs étapes, les différentes étapes étant réalisées dans des conditions réactionnelles différentes, le film ayant en outre une couche de thermoscellage (12), comprenant principalement des polymères d'éthylène basse densité choisis dans le groupe constitué par le LDPE, le LLDPE, le LLDPE obtenu par catalyse métallocène (m-LLDPE) et les mélanges d'au moins deux d'entre eux, la couche de thermoscellage étant contiguë à la couche centrale sur un premier côté, la couche centrale ayant en outre une couche de réception de revêtement (14), appliquée en contact contigu avec son deuxième côté, opposé, sous un revêtement barrière déposé en phase vapeur (13) de 5-200 nm d'épaisseur, la couche de réception de revêtement comprenant en majorité un polymère d'éthylène obtenu par catalyse métallocène choisi dans le groupe constitué par le m-LLDPE, le m-HDPE et le m-MDPE, et le film polymère ayant une épaisseur totale de 12 à 20 µm.

2. Film polymère thermomécaniquement stable, thermoscellable (10a ; 10b), selon la revendication 1, dans lequel le revêtement mince déposé en phase vapeur (13) est une couche de métal ou d'oxyde métallique, de préférence d'aluminium métallique.

3. Film polymère thermomécaniquement stable, thermoscellable (10a ; 10b), selon l'une quelconque des revendications précédentes, le film étant un film soufflé, c.-à-d. un film fabriqué au moyen d'une technologie de soufflage de film et revêtement consécutif par dépôt en phase vapeur.

4. Film polymère thermomécaniquement stable, thermoscellable (10a ; 10b), selon l'une quelconque des revendications précédentes, dans lequel le polyéthylène obtenu par catalyse métallocène de la couche de réception de revêtement est mélangé avec un polyéthylène non obtenu par catalyse métallocène dans la même catégorie de densité.

5. Film polymère thermomécaniquement stable, thermoscellable (10a ; 10b), selon la revendication 4, dans lequel la couche de réception de revêtement comprend un mélange de m-HDPE et de HDPE.

6. Film polymère thermomécaniquement stable, thermoscellable (10a ; 10b), selon l'une quelconque des revendications 2 à 5, dans lequel la couche métallisée (13) a une densité optique (OD) de 1,8 à 3,0, de préférence de 2,0 à 2,7, mieux encore de 2,2 à 2,6.

7. Film polymère thermomécaniquement stable, thermoscellable (10a ; 10b), selon l'une quelconque des revendications 2 à 6, dans lequel la couche métallisée (13) a une adhérence d'au moins 200 N/m, de préférence au moins 300 N/m.

8. Film polymère thermomécaniquement stable, thermoscellable (10a ; 10b), selon l'une quelconque des revendications précédentes, le film ayant un taux de transmission d'oxygène inférieur à 100 cm³/(m²*24 h), 1 atm O₂, 23 °C, 50 % HR.

9. Film polymère thermomécaniquement stable, thermoscellable (10a ; 10b), selon l'une quelconque des revendications précédentes, le film ayant un taux de perméation de vapeur d'eau de moins de 5, de préférence moins de 1 g/m² à 38 et 23 °C, 24 heures, à un gradient de 0 à 90 % HR.

10. Stratifié d'emballage (20a) comprenant un film (10a ; 10b), selon l'une quelconque des revendications 1 à 9, comprenant également une couche centrale de papier ou de carton (21a).

11. Stratifié d'emballage selon la revendication 10, ledit film polymère thermoscellable (10a ; 10b) formant une surface du stratifié d'emballage (20a) destinée à former une surface intérieure d'un emballage fabriqué à partir dudit stratifié d'emballage.

12. Stratifié d'emballage selon l'une quelconque des revendications 10 et 11, dans lequel une autre couche barrière à l'oxygène est disposée entre le carton (21a) et le film polymère thermoscellable (10a ; 10b).

13. Récipient d'emballage pour liquides (50a ; 50b) formé à partir d'un stratifié d'emballage (20a) selon l'une quelconque des revendications 10 à 12.

14. Procédé de fabrication du film polymère thermomécaniquement stable, thermoscellable, à revêtement barrière, selon l'une quelconque des revendications 1 à 9, lequel procédé comprend les étapes de :
a) formation d'un film polymère (34) à une épaisseur de 12 à 20 µm, de préférence de 14 à 18 µm, au moyen d'un procédé de fabrication par extrusion (30, 32), le film polymère comprenant une couche centrale (11) consistant en du polyéthylène, et comprenant plus de 40 % en poids d'un polyéthylène choisi dans le groupe constitué par le MDPE, le HDPE, le MDPE modifié, le HDPE modifié et les mélanges d'au moins deux d'entre eux, modifié signifiant des qualités de polymère qui ont été modifiées dans le procédé de polymérisation pour comporter deux constituants ayant des caractéristiques de poids moléculaire différentes, c.-à-d. pas un mélange physique, mais une composition polymérisée de deux types de polymères, ayant une distribution de poids moléculaire dite bimodale ou multimodale, qui peut être obtenue par un procédé de polymérisation en plusieurs étapes, les différentes étapes étant réalisées dans des conditions réactionnelles différentes, le film polymère comprenant en outre une couche de thermoscellage (12) comprenant principalement des polymères d'éthylène basse densité choisis dans le groupe constitué par le LDPE, le LLDPE, le LLDPE obtenu par catalyse métallocène (m-LLDPE) et les mélanges d'au moins deux d'entre eux, qui est stratifiée avec la couche centrale sur un premier côté, et la couche centrale ayant en outre une couche de réception de revêtement (14), qui est appliquée en contact contigu avec son deuxième côté, opposé, et qui comprend en majorité un polymère d'éthylène obtenu par catalyse métallocène choisi dans le groupe constitué par le m-LLDPE, le m-HDPE et le m-MDPE, et ensuite
b) dépôt en phase vapeur (40) d'un revêtement barrière sur l'autre côté, le deuxième, du film, sur la couche de réception de revêtement.

15. Procédé de fabrication du film polymère thermomécaniquement stable, thermoscellable, à revêtement barrière, selon la revendication 14, lequel procédé comprend en outre l'étape de
c) traitement de surface du deuxième côté du film polymère pour qu'il soit revêtu par dépôt en phase vapeur, avant l'étape b) de dépôt en phase vapeur du revêtement barrière.

16. Procédé selon l'une quelconque des revendications 14 et 15, dans lequel la couche de revêtement déposée en phase vapeur est une couche métallisée.

17. Procédé selon la revendication 16, dans lequel la couche métallisée est déposée en phase vapeur à une densité optique (OD) de 1,8 à 3,0, de préférence de 2,0 à 2,7, mieux encore de 2,2 à 2,6.
